# EUROPÄISCHE PATENTSCHRIFT

(11) **EP 1 301 561 B1**
(45) Veröffentlichungstag und Bekanntmachung des Hinweises auf die Patenterteilung: **06.04.2005**
(21) Anmeldenummer: 01984165.9
(22) Anmeldetag: 12.07.2001
(51) Int. Cl.: C08J 9/00, C09K 11/06, C08J 9/16, G01N 21/64, B07C 5/342

(54) **EXPANDIERBARE MARKIERTE POLYSTYROLPARTIKEL**
EXPANDIBLE MARKED POLYSTYRENE PARTICLES
PARTICULES DE POLYSTYRENE MARQUEES EXPANSIBLES

(30) Priorität: 12.07.2000 AT 12152000
(43) Veröffentlichungstag der Anmeldung: 16.04.2003
(73) Patentinhaber: Sunpor Kunststoff GmbH, 3100 St. Pölten (AT)
(72) Erfinder: EBERSTALLER, Roman, A-3200 Obergrafendorf (AT)
(74) Vertreter: Wildhack, Helmut, Dr. Dipl.-Ing.
(86) Internationale Anmeldenummer: PCT/AT2001/000236
(87) Internationale Veröffentlichungsnummer: WO 2002/004553

(56) Entgegenhaltungen:
- US-A- 3 635 832
- US-A- 5 329 127
- "How to use the new fluorescents" MODERN PLASTICS, Februar 1961 (1961-02), Seite 88,89,90,166,167,168. XP002155963

## Beschreibung

Die Erfindung bezieht sich auf expandierbare Polystyrolpartikel, die mit einer Markierung versehen sind, die durch einen UV-Strahlen absorbierenden Aufheller gebildet ist, der in die Partikel eingearbeitet ist, weiters auf eine Mischung aus solchen Partikeln und auf ein Verfahren zur Herstellung solcher Partikel und aus solchen Partikeln bzw. Mischungen hergestellte Polystyrolschaumstoffformteile.

Bekanntlich lassen sich treibmittelhaltige Polystyrolpartikel durch Erwärmung mit Wasserdampf (Vorschäumprozess) unter Vervielfachung ihres Volumens expandieren und anschließend durch Verschweißung zu beliebig geformten Formteilen, z.B. Blöcken, verarbeiten. Solche Formteile finden vorwiegend Anwendung als Dämmstoffe im Baubereich (z.B. für Gebäudefassaden oder Kühlhäuser), sowie als Verpackungsmaterial.

Expandierbare Polystyrolpartikel (EPS) werden zumeist durch Suspensionspolymerisation von Styrol mit anschließender Treibmittel-Imprägnierung hergestellt. Hiebei entstehen perlenartige Teilchen unterschiedlicher Größe.

Es besteht jedoch auch die Möglichkeit, expandierbare Polystyrolpartikel mittels Extrusion herzustellen, wobei Polystyrol mit einem geeigneten MFI (Melt Flow Index) aufgeschmolzen, mit Treibmittel imprägniert, abgekühlt und durch eine Lochplatte gepresst wird. Die dabei entstehenden Fäden werden möglichst rasch mittels eines Wasserbades abgekühlt, um ein Aufschäumen des Polystyrols zu verhindern. Anschließend werden die gekühlten Stränge in bekannter Weise in kleine, zylinderförmige Partikel im wesentlichen einheitlicher Größe granuliert. Diese Partikel können analog den durch Suspensionspolymerisation hergestellten Teilchen verarbeitet werden.

Als Hauptkomponente können Polystyrol und Mischpolymerisate des Styrols mit anderen Verbindungen, wie z.B. α-Methylstyrol, Acrylnitril, Maleinsäureanhydrid, Butadien, Divinylbenzol, verwendet werden.

Als Treibmittel kommen unter Normalbedingungen gasförmige oder flüssige Kohlenwasserstoffe in Frage, die einen Siedepunkt unterhalb des Erweichungspunktes des Polymerisates haben. Typische Vertreter dieser Verbindungen sind Propan, Butan, Pentan und Hexan.

Weiters können alle üblichen Hilfsstoffe wie Nukleierungsmittel, Flammschutzmittel, UV-Stabilisatoren, Weichmacher, Antioxidantien und Säurefänger eingesetzt werden. Auch eine oberflächliche Behandlung mit Pigmenten und Coatingmaterialien zur Verhinderung von Klumpung und Statik als auch zur Reduktion der Kühlzeit oder der Wasseraufnahme ist möglich.

Es kommen in zunehmendem Maße expandierbare Polystyrolgranulate auf den Markt, welche spezielle Eigenschaften aufweisen, z.B. EPS mit einer verminderten Wasseraufnahme. Dies bringt die Gefahr mit sich, dass am Verwendungsort die einzelnen Typen der Polystyrolgranulate miteinander verwechselt werden, so dass ein für den speziell gewünschten Zweck ungeeignetes Produkt zur Anwendung gelangt. Wohl können die einzelnen Produkte hinsichtlich ihrer Eigenschaften und chemischen Zusammensetzung voneinander unterschieden werden, aber dies ist nur durch aufwendige chemische Analysen durchführbar.

Aus EP 470.455 A ist es bekannt, antistatisch ausgerüstete, durch Suspensionspolymerisation hergestellte Styrolpolymerisate von nicht ausgerüsteten dadurch zu unterscheiden, dass man sie mit einem im UV-Bereich absorbierenden Fluoreszenzfarbstoff beschichtet. Dadurch ist aber keine zufriedenstellende typspezifische Markierung durchführbar. Wie erwähnt, fallen bei der Suspensionspolymerisation nämlich unterschiedliche Korngrößen an, welche zu unterschiedlichen Produkttypen weiterverarbeitet werden, sodass eine typspezifische (also hinsichtlich der Teilchenkorngröße spezifische) Markierung nur nach einer Siebung mittels einer Oberflächenbehandlung möglich ist. Eine solche Oberflächenbehandlung verliert aber durch eine anschließende Oberflächenbehandlung, insbesondere eine Einfärbung, ihre Wirkung. Ein weiterer Nachteil einer solchen Oberflächenmarkierung ist, dass beim mittels Wasserdampf durchgeführten Vorschäumprozess ein undefiniert großer Anteil der Markierungssubstanz von der Oberfläche der Teilchen abgewaschen wird.

Aus GB 1,059,777 A ist es bekannt, in durch Suspensionspolymerisation hergestellte Polystyrolpartikel eine Markierung einzuarbeiten. Auch hiefür gelten die auf die unterschiedlichen Korngrößen zurückzuführenden Nachteile.

Die Erfindung setzt sich zur Aufgabe, diese Nachteile zu vermeiden und expandierbare Polystyrolpartikel der eingangs beschriebenen Art so zu verbessern, dass eine typspezifische Markierung erzielt wird, welche beständig ist gegen eine anschließende Oberflächenbehandlung der Partikel bzw. gegen bei der Verarbeitung zu Endprodukten anfallende Beanspruchungen. Die Erfindung löst diese Aufgabe dadurch, dass die Polystyrolpartikel stäbchenförmige extrusionsbegaste Granulatteilchen mit im wesentlichen einheitlicher Korngröße sind, die zumindest einen solchen Aufheller eingearbeitet enthalten. Ein so behandeltes Polystyrolpartikelmaterial ist typspezifisch markiert, da die erhaltenen Polystyrolpartikel durch den Extrusions- und Granuliervorgang zumindest im wesentlichen gleiche Größe haben. Die Durchfärbung der einzelnen Partikel mit dem Markierungsmaterial hat zur Folge, dass die Oberfläche der Partikel nach dem Granulationsvorgang in beliebiger Weise behandelt werden kann, auch durch eine Einfärbung des Materiales, ohne dass dadurch die Markierung leidet. Auch eine oberflächliche Einfärbung der Granulatteilchen ändert die Markierungseigenschaften nicht, da die oberflächliche Einfärbung auf das Innere der Partikel nicht einwirkt. Die Markierung im Inneren der Partikel kann durch Aufschneiden derselben in einfacher Weise sichtbar gemacht werden. Während bei Tageslicht die optischen Eigenschaften der so ausgebildeten Polystyrolpartikel unverändert bleiben, wird bei Betrachtung der Partikel unter UV-Licht (Wellenlänge 270 bis 430 nm) die Markierung jedoch sofort erkennbar, sodass das in bestimmter Weise markierte Material von andersartigen Materialien bzw. in anderer Weise markierten Materialien leicht unterschieden werden kann. Eine Siebung der extrudierten Partikel ist zum Unterschied von durch Suspensionspolymerisation hergestellten Partikeln ist nicht erforderlich.

Gemäß einer bevorzugten Ausführungsform der Erfindung liegt der Aufheller im Inneren der Granulatteilchen in gleichmäßiger Verteilung vor, um einerseits für alle Granulatteilchen gleiche Markierungsqualität sicherzustellen, anderseits den Markierungsgrad von Zufälligkeiten unabhängig zu machen.

Geeignete Markierungsmaterialien sind optische Aufheller (im UV-Bereich absorbierende Fluoreszenzfarbstoffe), wie z.B. Uvitex FP (4,4'-bis(2-methoxystyryl)-1-1'-biphenyl) oder Uvitex OB (2,5-thiophenediylbis(5-tert-butyl-1,3-benzoxazol)), beide von Ciba Geigy GmbH. Aus kommerziellen Gründen genügt es, die Konzentration des Aufhellers im durchgefärbten Granulat gering zu halten, in der Regel zwischen 1 und 100 ppm.

Wenn die Polystyrolpartikel, welche durch die Extrusion erhalten sind, mehr als einen Aufheller eingearbeitet enthalten, so können diese Aufheller so beschaffen sein, dass sie bei UV-Bestrahlung voneinander unterschiedlich gefärbtes Licht emittieren. Dadurch wird die Variationsbreite für die Markierung wesentlich gesteigert, da nunmehr auch Mischfarben oder Farbkombinationen für die Markierung erzielbar sind, z.B. durch Verwendung gelb und blau fluoreszierender Aufheller eine grüne Markierung, durch Verwendung von rot und gelb fluoreszierenden Aufhellern eine orange-färbige Markierung usw. Beispiele für solche in unterschiedlichen Farben fluoreszierende Beimengungen sind Luminux Gelb CD 305, Luminux Blau CD 311, Luminux Grün CD 321 der Firma Honeywell.

Die Größe der Granulatteilchen hängt ab von Anzahl und Durchmesser der Extrusionsdüsen und von der Art und Weise, wie die Granulatteilchen aus den aus der Düse austretenden Strängen abgezogen und abgeschlagen werden. In der Regel haben die Granulatteilchen einen Durchmesser von 0,3 bis 2 mm, vorzugsweise 0,5 bis 1,2 mm, und eine Länge von 1 bis 4 mm, vorzugsweise 1,3 bis 2,5 mm.

Das durchgefärbte Granulatmaterial, das im wesentlichen einheitliche Korngröße hat, kann natürlich als solches als Rohmaterial für die Herstellung von beliebigen Schaumstoffformkörpern od.dgl. verwendet werden. Aus kommerziellen Gründen ist es mit Rücksicht auf die Markierungsmaterialkosten im Rahmen der Erfindung aber günstiger, eine Mischung aus EPS-Partikeln herzustellen, wobei nur ein Anteil der Partikel einen eine UV-Bestrahlung absorbierenden Aufheller eingearbeitet enthält. Die typspezifische Markierung geht hierbei nicht verloren, wenn die Partikelgröße der markierten Teilchen im wesentlichen mit der Partikelgröße der nicht markierten Teilchen übereinstimmt. Das Mischungsverhältnis kann aus technischer Sicht beliebig gewählt werden, jedoch hat es sich als vorteilhaft erwiesen, das markierte EPS-Material mit einem Prozentsatz zwischen 0,5 und 50 Gew.-%, vorzugsweise 1 bis 15 Gew.-%, beizumengen. Damit wird sowohl eine ausreichende Markierung erzielt, als auch eine kommerziell vertretbare Lösung gegeben.

Die erwähnte Mischung der EPS-Partikel kann durchwegs extrusionsbegaste Granulatpartikel enthalten, es ist jedoch auch möglich, die in erfindungsgemäßer Weise markierten EPS-Granulatteilchen mit durch Suspensionspolymerisation erhaltenen Partikeln zu mischen, unter der Voraussetzung, dass der für die jeweils vorliegende Materialtype spezifische Teilchengrößenbereich erhalten bleibt.

Wie schon bei den Polystyrolpartikeln an sich, lassen sich in unterschiedlichen Farben emittierende Aufheller auch bei einer Mischung in vorteilhafter Weise einsetzen, wenn die Mischung zumindest zwei Partikelanteile enthält, die voneinander unterschiedliche Aufheller enthalten, die mit unterschiedlichen Farben emittieren. Auf diese Weise lässt sich eine Markierung der Mischung bzw. des daraus hergestellten Produktes erzielen, die in Mischfarben bzw. in Farbkombinationen bei UV-Bestrahlung fluoresziert.

Die markierten Teilchen der Mischung können, ebenso wie die unmarkierten Teilchen, oberflächlich eingefärbt sein, da - wie bereits erwähnt - die Markierung darunter nicht leidet.

Ebenso kann die Mischung übliche Zusätze enthalten, z.B. aliphatische, cycloaliphatische und aromatische Bromverbindungen, welche als Flammschutzmittel wirken, wie Hexabromcyclododecan. Weiters kann die Wirkung der Flammschutzmittel durch den Zusatz von Synergisten verbessert werden. Typische Vertreter solcher Flammschutzsynergisten sind Dicumyl oder Dicumylperoxid.

Das erfindungsgemäße Verfahren zur Herstellung expandierbarer Polystyrolpartikel der erfindungsgemäßen Art ist dadurch gekennzeichnet, dass Polystyrol gemeinsam mit zumindest einem Treibmittel und zumindest einem Aufheller extrudiert und granuliert wird. Gegebenenfalls können hierbei während der Extrusion zusätzliches Treibmittel und/oder Zusatzstoffe, z.B. Flammschutzmittel, zugeführt und gemeinsam extrudiert werden.

Um eine gleichmäßige Verteilung des in sehr geringen Mengen vorliegenden fluoreszierenden Stoffes in den Partikel zu gewährleisten, ist es hierbei zweckmäßig, ein Masterbatch mit einem Aufhelleranteil von 0,25 bis 1 Gew.-% gemeinsam mit dem restlichen Polystyrolmaterial zu extrudieren. Eine Alternative hierzu besteht darin, den Aufheller vor der Zuführung zum Extruder auf kleine Polystyrolteilchen, insbesondere ein Polystyrolgranulat, mit Hilfe eines Mischaggregates aufzutrommeln.

Derartige, typspezifisch markierte EPS-Mischungen können zu Polystyrolschaumstoffformteilen beliebiger Gestalt und Dichte verarbeitet werden, insbesondere für Dämmzwecke im Baubereich, z.B. Gebäudefassaden, Kühlhäuser, aber auch als Verpackungsmaterial.

### Beispiel 1:

Polystyrol mit einem Molekulargewicht von etwa 220.000 wurde in einem Extruder gemeinsam mit 1,3 % HBCD, 0,2 % Dicumyl und 1 % eines 1 %igen Masterbatch (1 Gew.-% Uvitex FP; 99 Gew.-% Polystyrol) aufgeschmolzen, mit 6,3 % Pentan versetzt, gemischt, auf etwa 120°C abgekühlt und durch eine Lochdüse gepreßt. Die entstehenden Stränge mit einem Durchmesser von ca. 0,8 mm wurden in einem Wasserbad unter die Erstarrungstemperatur gekühlt und anschließend mittels Stranggranulator granuliert (Granulatlänge 1,5 mm).

25 kg dieses Granulates wurden mit 475 kg polymerisiertem EPS mit einer Perldurchmessergröße von 0,6 bis 1,1 mm mittels Trommelmischer gemischt und mit für diesen Zweck üblichen Coatingmaterialien beschichtet, um ein Verkleben während des Aufschäumvorganges zu verhindern.

Die entstandene Mischung wurde anschließend in einem diskontinuierlichen Vorschäumer auf eine Dichte von 30 g/l vorgeschäumt Nach einer Zwischenlagerung von 24 h wurden Blöcke mit den Maßen 600 x 600 x 190 mm hergestellt.

Die entstandenen Formteile waren unter Tageslicht nicht von nicht markierten EPS-Formteilen unterscheidbar. Bei der Bestrahlung mit Hilfe einer UV-Lampe (366 nm Wellenlänge) waren die markierten Schaumstoffteilchen sowohl oberflächlich als auch in Querschnitt deutlich durch blaues Leuchten zu erkennen.

Die Beimengung des markierten EPS-Granulates verursachte keine Änderung der Verarbeitungs- oder Endprodukteigenschaften.

### Beispiel 2:

Die Vorgangsweise entsprach dem Beispiel 1, jedoch wurde die fertige EPS-Teilchenmischung oberflächlich eingefärbt. Zu diesem Zweck wurden 500 kg EPS-Mischung mit 0,5 kg grünem Farbstoff (Hein Farbpulver; Fa. Hein-Farben) vermischt und anschließend mit 3,5 Liter Isopropanol fixiert.

Nach dem Schäumprozess wurden ebenfalls Schaumstoffformkörper hergestellt, die eine gleichmäßig grün gefärbte Oberfläche aufwiesen. Durch Aufschneiden der Formkörper konnte die Markierung mittels UV-Licht problemlos sichtbar gemacht werden.

## Patentansprüche

1. Expandierbare Polystyrolpartikel, die mit einer Markierung versehen sind, die durch einen UV-Strahlen absorbierenden Aufheller gebildet ist, der in die Partikel eingearbeitet ist, **dadurch gekennzeichnet, dass** die Polystyrolpartikel stäbchenförmige extrusionsbegaste Granulatteilchen mit im Wesentlichen einheitlicher Korngröße sind, die zumindest einen solchen Aufheller eingearbeitet enthalten.

2. Polystyrolpartikel nach Anspruch 1, **dadurch gekennzeichnet, dass** jeder Aufheller im Inneren der Granulatteilchen in gleichmäßiger Verteilung vorliegt.

3. Polystyrolpartikel nach Anspruch 1 oder 2, **dadurch gekennzeichnet, dass** der Anteil der Aufheller 1 bis 100 ppm beträgt.

4. Polystyrolpartikel nach einem der Ansprüche 1 bis 3, **dadurch gekennzeichnet, dass** die Granulatteilchen einen Durchmesser von 0,3 bis 2 mm aufweisen und eine Länge von 1 bis 4 mm.

5. Polystyrolpartikel nach Anspruch 4, **dadurch gekennzeichnet, dass** der Durchmesser der Granulatteilchen 0,5 bis 1,2 mm beträgt.

6. Polystyrolpartikel nach Anspruch 4 oder 5, **dadurch gekennzeichnet, dass** die Länge der Granulatteilchen 1,3 bis 2,5 mm beträgt.

7. Polystyrolpartikel nach einem der Ansprüche 1 bis 6, **dadurch gekennzeichnet, dass** sie mehr als einen Aufheller eingearbeitet enthalten, wobei die Aufheller bei UV-Bestrahlung voneinander unterschiedlich gefärbtes Licht abgeben.

8. Mischung aus EPS-Partikeln, **dadurch gekennzeichnet, dass** nur ein Anteil der Partikel zumindest einen UV-Strahlen absorbierenden Aufheller eingearbeitet enthält.

9. Mischung nach Anspruch 8, **dadurch gekennzeichnet, dass** der Anteil der markierten Partikel 0,5 bis 50 Gew.-% beträgt.

10. Mischung nach Anspruch 9, **dadurch gekennzeichnet, dass** der Anteil der markierten Partikel 1 bis 15 Gew.-% beträgt.

11. Mischung nach einem der Ansprüche 8 bis 10, **dadurch gekennzeichnet, dass** sie markierte extrusionsbegaste Granulatteilchen und durch Suspensionspolymerisation erhaltene unmarkierte Partikel enthält.

12. Mischung nach einem der Ansprüche 8 bis 11, **dadurch gekennzeichnet, dass** sie zumindest zwei Partikelanteile enthält, die voneinander unterschiedliche Aufheller enthalten, die mit unterschiedlichen Farmen emittieren.

13. Mischung nach einem der Ansprüche 8 bis 12, **dadurch gekennzeichnet, dass** die Teilchen der Mischung oberflächlich eingefärbt sind.

14. Mischung nach einem der Ansprüche 8 bis 13, **dadurch gekennzeichnet, dass** die Mischung Zusatzstoffe enthält.

15. Mischung nach Anspruch 14, **dadurch gekennzeichnet, dass** sie Flammschutzmittel, z.B. Hexabromcyclododecan, enthält.

16. Verfahren zur Herstellung expandierbarer Polystyrolpartikel nach einem der Ansprüche 1 bis 7, **dadurch gekennzeichnet, dass** Polystyrol gemeinsam mit zumindest einem Treibmittel und zumindest einem Aufheller extrudiert und granuliert wird.

17. Verfahren nach Anspruch 16, **dadurch gekennzeichnet, dass** während der Extrusion zusätzliches Treibmittel und/oder Zuatzstoffe zugeführt und gemeinsam extrudiert werden.

18. Verfahren nach Anspruch 17, **dadurch gekennzeichnet, dass** als Zusatzstoffe Flammschutzmittel zugeführt werden.

19. Verfahren nach Anspruch 16 bis 18, **dadurch gekennzeichnet, dass** ein Masterbatch mit einem Aufhelleranteil von 0,25 bis 1 Gew.-% gemeinsam mit dem restlichen Polystyrol extrudiert wird.

20. Verfahren nach einem der Ansprüche 16 bis 19, **dadurch gekennzeichnet, dass** jeder Aufheller vor der Zuführung zum Extruder auf teilchenförmiges Polystyrol mit Hilfe eines Mischaggregats aufgetrommelt wird.

21. Verfahren nach Anspruch 20, **dadurch gekennzeichnet, dass** als teilchenförmiges Polystyrol ein Granulat eingesetzt wird.

22. Polystyrolschaumstoffformteil aus miteinander verschweißten EPS-Teilchen, **dadurch gekennzeichnet, dass** ein Anteil der Teilchen zumindest einen UV-Strahlen absorbierenden Aufheller eingearbeitet enthält.

23. Verwendung eines Polystyrolschaumstoffformteiles nach Anspruch 22 für Dämmzwecke im Baubereich.

## Claims

1. Expandable polystyrene particles provided with a marking formed by a brightening agent that absorbs UV rays and is incorporated into the particles, **characterised in that** the polystyrene particles are rod-shaped extrusion-gassed granulate particles of substantially uniform particle size which contain at least one such brightening agent incorporated therein.

2. Polystyrene particles according to claim 1, **characterised in that** each brightening agent is present in uniform distribution inside the granulate particles.

3. Polystyrene particles according to claim 1 or 2, **characterised in that** the amount of brightening agents is from 1 to 100 ppm.

4. Polystyrene particles according to any one of claims 1 to 3, **characterised in that** the granulate particles have a diameter of from 0.3 to 2 mm and a length of from 1 to 4 mm.

5. Polystyrene particles according to claim 4, **characterised in that** the diameter of the granulate particles is from 0.5 to 1.2 mm.

6. Polystyrene particles according to claim 4 or 5, **characterised in that** the length of the granulate particles is from 1.3 to 2.5 mm.

7. Polystyrene particles according to any one of claims 1 to 6, **characterised in that** they contain more than one brightening agent incorporated therein, the brightening agents emitting differently coloured light when exposed to UV radiation.

8. Mixture of EPS particles, **characterised in that** only a portion of the particles contains at least one incorporated brightening agent that absorbs UV rays.

9. Mixture according to claim 8, **characterised in that** the proportion of marked particles is from 0.5 to 50 wt.%.

10. Mixture according to claim 9, **characterised in that** the proportion of marked particles is from 1 to 15 wt.%.

11. Mixture according to any one of claims 8 to 10, **characterised in that** it contains marked extrusion-gassed granulate particles and unmarked particles obtained by suspension polymerisation.

12. Mixture according to any one of claims 8 to 11, **characterised in that** it contains at least two particle components containing different brightening agents that emit with different colours.

13. Mixture according to any one of claims 8 to 12, **characterised in that** the particles of the mixture have been dyed at the surface.

14. Mixture according to any one of claims 8 to 13, **characterised in that** the mixture contains additives.

15. Mixture according to claim 14, **characterised in that** it contains flameproofing agents, for example hexabromocyclododecane.

16. Process for the production of expandable polystyrene particles according to any one of claims 1 to 7, **characterised in that** polystyrene together with at least one blowing agent and at least one brightening agent is extruded and granulated.

17. Process according to claim 16, **characterised in that**, during the extrusion, additional blowing agent and/or additives are fed in and extruded together.

18. Process according to claim 17, **characterised in that** flameproofing agents are fed in as additives.

19. Process according to claim 16 to 18, **characterised in that** a masterbatch having a content of brightening agent of from 0.25 to 1 wt.% is extruded together with the remainder of the polystyrene.

20. Process according to any one of claims 16 to 19, **characterised in that** each brightening agent, before being fed to the extruder, is applied to particulate polystyrene by tumbling with the aid of a mixing unit.

21. Process according to claim 20, **characterised in that** a granulate is used as the particulate polystyrene.

22. Polystyrene foam shaped article made of EPS particles bonded with one another, **characterised in that** a portion of the particles contains at least one incorporated brightening agent that absorbs UV rays.

23. Use of a polystyrene foam shaped article according to claim 22 for insulating purposes in the construction sector.

## Revendications

1. Particules de polystyrène expansible présentant un marquage formé par un azurant absorbant les UV et incorporé dans la particule, **caractérisée en ce que** les particules de polystyrène sont des granulés en forme de bâtonnets obtenus par extrusion/injection de gaz avec une granulométrie sensiblement homogène et contenant au moins un azurant de ce type.

2. Particules de polystyrène selon la revendication 1, **caractérisé en ce que** chaque azurant est uniformément réparti à l'intérieur des granulés.

3. Particules de polystyrène selon la revendication 1 ou la revendication 2, **caractérisé en ce que** la teneur en azurant est comprise entre 1 et 100 ppm.

4. Particule de polystyrène selon l'une quelconque des revendications 1 à 3, **caractérisée en ce que** les granulés présentent un diamètre compris entre 0,3 et 2 mm et une longueur comprise entre 1 et 4 mm.

5. Particule de polystyrène selon la revendication 4, **caractérisée en ce que** le diamètre des granulés est compris entre 0,5 et 1,2 mm.

6. Particule de polystyrène selon la revendication 4 ou la revendication 5, **caractérisée en ce que** la longueur des granulés est comprise entre 1,3 et 2,5 mm.

7. Particules de polystyrène selon l'une quelconque des revendications 1 à 6, **caractérisées en ce qu'**elles contiennent plus d'un azurant, lesdits azurants émettant des lumières de couleurs différentes lorsqu'ils sont exposés à des UV.

8. Mélange de particules de PSE, **caractérisé en ce que** seule une partie des particules contient au moins un azurant absorbant les UV.

9. Mélange selon la revendication 8, **caractérisé en ce que** la proportion de particules marquées est comprise entre 0,5 et 50 % en poids.

10. Mélange selon la revendication 9, **caractérisé en ce que** la proportion de particules marquées est comprise entre 1 et 15 % en poids.

11. Mélange selon l'une quelconque des revendications 8 à 10, **caractérisé en ce qu'**il contient des granulés marqués obtenus par extrusion/incorporation de gaz ainsi que des particules non marquées obtenues par polymérisation en suspension.

12. Mélange selon l'une quelconque des revendications 8 à 11, **caractérisé en ce qu'**il contient au moins deux groupes de particules contenant des azurants différents, qui émettent des couleurs différentes.

13. Mélange selon l'une quelconque des revendications 8 à 12, **caractérisé en ce que** les particules du mélange sont colorées en surface.

14. Mélange selon l'une quelconque des revendications 8 à 13, **caractérisé en ce qu'**il contient des adjuvants.

15. Mélange selon la revendication 14, **caractérisé en ce qu'**il contient des agents ignifugeants, comme l'hexabromocyclododécane.

16. Procédé de fabrication de particules de polystyrène expansible selon l'une quelconque des revendications 1 à 7, **caractérisé en ce que** le polystyrène est extrudé avec au moins un agent gonflant et au moins un azurant puis granulé.

17. Procédé selon la revendication 16, **caractérisé en ce que** d'autres agents gonflants et/ou adjuvants sont admis pendant l'extrusion et extrudés avec le polystyrène.

18. Procédé selon la revendication 17, **caractérisé en ce que** les adjuvants admis sont des agents ignifugeants.

19. Procédé selon l'une quelconque des revendications 16 à 18, **caractérisé en ce qu'**un mélange-maître présentant une teneur en azurant comprise entre 0,25 et 1 % en poids est extrudé avec le reste du polystyrène.

20. Procédé selon l'une quelconque des revendications 16 à 19, **caractérisé en ce que**, avant d'être admis dans l'extrudeuse, chaque azurant est rapporté sur du polystyrène en particules au moyen d'un mélangeur à tambour.

21. Procédé selon la revendication 20, **caractérisé en ce que** le polystyrène en particules employé se présente sous la forme de granulés.

22. Pièce moulée en mousse de polystyrène à partir de particules de PSE soudées entre elles, **caractérisée en ce qu'**au moins un azurant absorbant les UV est incorporé dans une partie des particules.

23. Utilisation d'une pièce moulée en mousse de polystyrène selon la revendication 22 à des fins d'isolation dans le secteur du bâtiment.
